# EUROPÄISCHE PATENTANMELDUNG

(11) **EP 2 381 213 A1**
(43) Veröffentlichungstag der Anmeldung: **26.10.2011**
(21) Anmeldenummer: 11160099.5
(22) Anmeldetag: 29.03.2011
(51) Int. Cl.: G01B 11/02, G01B 11/24

(54) **Verfahren und Vorrichtung zur Vermessung eines Lagerbauteils**

(30) Priorität: 21.04.2010 DE 102010015689
(71) Anmelder: Aktiebolaget SKF, 41 550 Göteborg (SE)
(72) Erfinder: von Schleinitz, Thilo, 97422, Schweinfurt (DE)
(74) Vertreter: Schonecke, Mitja

(57) **Zusammenfassung**

Die Erfindung betrifft ein Verfahren zur Vermessung eines Lagerbauteils (1), das eine erste Stirnfläche (3) und eine zweite Stirnfläche (4) aufweist, die entlang einer Rotationsachse (2) des Lagerbauteils (1) beabstandet zueinander angeordnet sind. Im Rahmen des erfindungsgemäßen Verfahrens wird die erste Stirnfläche (3) des Lagerbauteils (1) mit einem Lichtstrahl (12) wenigstens eines Triangulators (6) abgetastet, ein von der ersten Stirnfläche (3) reflektierter Lichtstrahl (13) vom Triangulator (6) detektiert und ein Messsignal erzeugt. Weiterhin wird die zweite Stirnfläche (4) des Lagerbauteils (1) mit einem Lichtstrahl (12) wenigstens eines weiteren Triangulators (6) abgetastet, ein von der zweiten Stirnfläche (4) reflektierter Lichtstrahl (13) vom weiteren Triangulator (6) detektiert und ein weiteres Messsignal erzeugt. Dabei werden die Erzeugung der Lichtstrahlen (12) und/oder die Detektion der reflektierten Lichtstrahlen (13) zeitgleich getriggert. Aus dem Messsignal wird eine die Position und räumliche Orientierung der ersten Stirnfläche (3) repräsentierende Lage der ersten Stirnfläche (3) ermittelt wird und aus dem weiteren Messsignal wird eine die Position und räumliche Orientierung der zweiten Stirnfläche (4) repräsentierende Lage der zweiten Stirnfläche (4) ermittelt.

## Beschreibung

Die Erfindung betrifft ein Verfahren und eine Vorrichtung zur Vermessung eines Lagerbauteils.

Eine präzise Maßhaltigkeit der Lagerbauteile ist eine wichtige Voraussetzung, um bei einem Lager eine hohe Laufruhe und eine lange Lebensdauer erzielen zu können. Dies gilt in besonderem Maß bei Lagern, die hohe Anforderungen an die Präzision erfüllen müssen oder die für einen Einsatz bei hohen Drehzahlen und/oder unter hohen Belastungen vorgesehen sind.

Auch wenn die Fertigung der Lagerbauteile mit hohem Aufwand und großer Sorgfalt betrieben und ständig verbessert wird, ist die Fertigungsgenauigkeit stets begrenzt. Deshalb werden die Lagerbauteile in der Regel einer Messung unterzogen, mit der ihre tatsächlichen Abmessungen überprüft werden. Dies erfordert allerdings einen erheblichen Aufwand. Um ein vorgegebenes Maß innerhalb einer zulässigen Toleranz zuverlässig einzuhalten, kann so vorgegangen werden, dass innerhalb dieser Toleranz gefertigt wird und etwaige Ausreißer durch eine Messung aller gefertigter Lagerbauteile ermittelt und aussortiert werden. Falls die Lagerbauteile in unterschiedlichen Größenklassen verwendet werden können, ist es auch möglich, mit einer größeren Toleranz zu fertigen und sämtliche Lagerbauteile dann präzise zu vermessen und abhängig vom Messergebnis in die unterschiedlichen Größenklassen einzusortieren.

Die Vermessung der Lagerbauteile erfolgt in der Regel in Form einer mechanischen Einzelmessung, bei der jeweils ein einzelnes Lagerbauteil in einem Messplatz angeordnet wird und ein berührender Kontakt einer Messsonde mit dem Lagerbauteil hergestellt wird. Eine derartige Messung ist relativ zeitaufwendig und stört den Fertigungsablauf, der meist in einem kontinuierlichen Durchlauf erfolgt. Außerdem birgt ein mechanischer Kontakt mit dem Lagerbauteil die Gefahr einer Beschädigung der Oberfläche des Lagerbauteils.

Eine Aufgabe der Erfindung besteht darin, ein Lagerbauteil schnell und präzise zu vermessen.

Diese Aufgabe wird durch die Merkmalskombinationen der nebengeordneten Ansprüche gelöst.

Beim erfindungsgemäßen Verfahren zur Vermessung eines Lagerbauteils, das eine erste Stirnfläche und eine zweite Stirnfläche aufweist, die entlang einer Rotationsachse des Lagerbauteils beabstandet zueinander angeordnet sind, wird die erste Stirnfläche des Lagerbauteils mit einem Lichtstrahl wenigstens eines Triangulators abgetastet, ein von der ersten Stirnfläche reflektierter Lichtstrahl vom Triangulator detektiert und ein Messsignal erzeugt. Weiterhin wird die zweite Stirnfläche des Lagerbauteils mit einem Lichtstrahl wenigstens eines weiteren Triangulators abgetastet, ein von der zweiten Stirnfläche reflektierter Lichtstrahl vom weiteren Triangulator detektiert und ein weiteres Messsignal erzeugt. Die Erzeugung der Lichtstrahlen und/oder die Detektion der reflektierten Lichtstrahlen werden zeitgleich getriggert. Aus dem Messsignal wird eine die Position und räumliche Orientierung der ersten Stirnfläche repräsentierende Lage der ersten Stirnfläche ermittelt. Aus dem weiteren Messsignal wird eine die Position und räumliche Orientierung der zweiten Stirnfläche repräsentierende Lage der zweiten Stirnfläche ermittelt.

Die Erfindung hat den Vorteil, dass damit eine präzise Vermessung der Lagerbauteile möglich ist. Ein weiterer Vorteil besteht darin, dass die Vermessung so schnell durchgeführt werden kann, dass es zu keiner nennenswerten Beeinträchtigung des Fertigungsprozesses kommt. Außerdem erfolgt die Vermessung sehr schonend ohne einen mechanischen Kontakt mit dem Lagerbauteil.

Zur Erzeugung des Messsignals kann die erste Stirnfläche an wenigstens drei verschiedenen Auftreffpunkten des Lichtstrahls des Triangulators auf die erste Stirnfläche abgetastet werden und zur Erzeugung des weiteren Messsignals kann die zweite Stirnfläche an wenigstens drei verschiedenen Auftreffpunkten des Lichtstrahls des weiteren Triangulators auf die zweite Stirnfläche abgetastet werden. Insbesondere kann die erste Stirnfläche an wenigstens einem Auftreffpunkt des Lichtstrahls des Triangulators auf die erste Stirnfläche abgetastet werden, der außerhalb einer Gerade liegt, welche durch zwei weitere Auftreffpunkte auf der ersten Stirnfläche verläuft und die zweite Stirnfläche an wenigstens einem Auftreffpunkt des Lichtstrahls des weiteren Triangulators auf die zweite Stirnfläche abgetastet werden, der außerhalb einer Gerade liegt, welche durch zwei weitere Auftreffpunkte auf der zweiten Stirnfläche verläuft. Dadurch kann erreicht werden, dass ausreichend Informationen für eine Lageermittlung verfügbar sind.

Aus dem Messsignal und dem weiteren Messsignal kann die Rotationsachse des Lagerbauteils näherungsweise ermittelt werden. Die Rotationsachse kann insbesondere als Winkelhalbierende des Lots auf die erste Stirnfläche und des Lots auf die zweite Stirnfläche ermittelt werden.

Weiterhin kann aus dem Messsignal und dem weiteren Messsignal ermittelt werden, ob die erste Stirnfläche und die zweite Stirnfläche des Lagerbauteils innerhalb einer vorgegebenen Toleranz eine vorgegebene Form aufweisen.

Im Rahmen des erfindungsgemäßen Verfahrens kann aus dem Messsignal und dem weiteren Messsignal ermittelt werden, ob die erste Stirnfläche und die zweite Stirnfläche des Lagerbauteils innerhalb einer vorgegebenen Toleranz parallel zueinander orientiert sind. Hierfür kann die ermittelte Lage der ersten Stirnfläche und der zweiten Stirnfläche herangezogen werden.

Aus der Lage der ersten Stirnfläche und aus der Lage der zweiten Stirnfläche kann ein Längenmaß des Lagerbauteils ermittelt werden. Dies hat den Vorteil, dass eine wesentlich fundiertere Aussage zur Längenabmessung des Lagerbauteils möglich ist, als wenn das Längenmaß beispielsweise aus dem Abstand zweier beliebiger Punkte der ersten Stirnfläche und der zweiten Stirnfläche ermittelt wird.

Insbesondere kann als Längenmaß die maximale Entfernung zwischen der ersten Stirnfläche und der zweiten Stirnfläche ermittelt werden. Die Einhaltung der maximalen Entfernung ist wichtig, da in vielen Fällen lediglich ein begrenzter Bauraum für das Lagerbauteil zur Verfügung steht.

Aus den Einzelmessungen kann ein Mittelwert ermittelt werden, beispielsweise durch arithmetische Mittelung. Dabei ist es von Vorteil, wenn Messwert-Ausreißer nicht in die Mittelung einbezogen werden. Derartige Ausreißer gehen nämlich häufig auf Störursachen, wie z. B. ein Staubkorn, zurück. Mit dem erfindungsgemäßen Verfahren lässt sich eine Messgenauigkeit besser als ± 5 µm, besser als ± 1 µm oder sogar besser als ± 0,5 µm ermitteln.

Das Lagerbauteil kann während der Messung bewegt werden. Dies erleichtert eine Integration des erfindungsgemäßen Verfahrens in den Fertigungsprozess. Die Bewegungsrichtung des Lagerbauteils kann parallel zu seiner Rotationsachse verlaufen. Im Rahmen des erfindungsgemäßen Verfahrens soll diese Bedingung als erfüllt gelten, wenn die Bewegungsrichtung des Lagerbauteils mit der Rotationsachse einen Winkel von maximal 5 Grad einschließt. Alternativ dazu wäre auch eine engere Definition mit einem Winkel von beispielsweise maximal 2 Grad denkbar.

Da das Lagerbauteil während der Fertigung in der Regel ebenfalls parallel zu seiner Rotationsachse bewegt wird, gestaltet sich die Integration des erfindungsgemäßen Verfahrens in diesem Fall besonders einfach. Ebenso ist es auch möglich, dass die Bewegungsrichtung des Lagerbauteils senkrecht zu seiner Rotationsachse verläuft. Diese Bedingung wird im Rahmen der Erfindung als erfüllt angesehen, wenn der Winkel zwischen der Bewegungsrichtung des Lagerbauteils und der Rotationsachse wenigstens 85 Grad und maximal 95 Grad beträgt. Alternativ könnte beispielsweise auch ein Intervall von 88 Grad bis 92 Grad gewählt werden. Eine Bewegungsrichtung des Lagerbauteils senkrecht zu seiner Rotationsachse ermöglicht eine besonders hohe Messgenauigkeit. Insbesondere wird das Lagerbauteil im kontinuierlichen Durchlauf vermessen. Die Transportgeschwindigkeit der Lagerbauteile kann dabei wenigstens 5 m/min, insbesondere wenigstens 10 m/min betragen. Weiterhin kann die Transportgeschwindigkeit der Lagerbauteile maximal 15 m/min betragen.

Im Rahmen des erfindungsgemäßen Verfahrens kann mit wenigstens einem Kalibrierelement eine Kalibrierung durchgeführt werden. Dadurch kann dauerhaft eine hohe Messgenauigkeit sichergestellt werden. Das Kalibrierelement kann so ausgebildet sein, dass es die zu ermittelnde Abmessung des Lagerbauteils mit hoher Präzision aufweist. Ebenso ist es auch möglich zwei Kalibrierelemente einzusetzen, wobei die Abmessungen des einen Kalibrierelements am unteren Ende und die Abmessungen des anderen Kalibrierelements am oberen Ende des zulässigen Toleranzbereichs für das Lagerbauteil liegen. Auf diese Weise kann eine Zweipunktkalibrierung vorgenommen werden. Insbesondere kann das Kalibrierelement die Form des Lagerbauteils aufweisen. Dabei ist es besonders vorteilhaft, wenn das Kalibrierelement anstelle des Lagerbauteils dem Messprozess zugeführt wird und anschließend wieder ausgeschleust wird. Dadurch ist es möglich, eine Rekalibrierung im Rahmen des Messprozesses vorzunehmen, so dass es durch die Kalibrierung allenfalls zu geringfügigen Verzögerungen kommt. Das Kalibrierelement kann automatisch ein- und ausgeschleust werden, wenn eine vorgegebene Bedingung erfüllt ist. Bei der vorgegebenen Bedingung kann es sich beispielsweise um das Verstreichen einer vorgegebenen Zeit seit der letzten Kalibrierung, das Erreichen einer vorgegebenen Anzahl von vermessenen Lagerbauteilen seit der letzten Kalibrierung, das Überschreiten einer vorgegebenen Fehlerquote usw. handeln.

Im Rahmen des erfindungsgemäßen Verfahrens kann die Temperatur des Lagerbauteils ermittelt werden. Da sich die Abmessungen des Lagerbauteils infolge der Wärmedehnung mit der Temperatur ändern, ist es bei einer präzisen Aussage zu den Abmessungen des Lagerbauteils sinnvoll, eine Information über die Temperatur des Lagerbauteils anzugeben. Eine Temperaturänderung kann beispielsweise kurz nach einer spanenden Bearbeitung des Lagerbauteils bei einer Anwendung des Messverfahrens im Herstellfluss erfolgen. Die Temperaturmessung kann insbesondere berührend bei ruhendem Lagerbauteil durchgeführt werden. Dadurch lässt sich eine besonders hohe Präzision erzielen. Ebenso ist es auch möglich, das Lagerbauteil so zu temperieren, dass seine Temperatur innerhalb eines vorgegebenen Temperaturbereichs liegt.

Das Lagerbauteil kann aussortiert werden, falls das ermittelte Längenmaß um mehr als eine zulässige Toleranz von einem vorgegebenen Wert abweicht. Ebenso ist es auch möglich, das Lagerbauteil abhängig vom ermittelten Längenmaß in eine von mehreren Längenklassen einzusortieren.

Die Erfindung betrifft weiterhin eine Messanordnung zur Vermessung eines Lagerbauteils, das eine erste Stirnfläche und eine zweite Stirnfläche aufweist, die entlang einer Rotationsachse des Lagerbauteils beabstandet zueinander angeordnet sind. Die erfindungsgemäße Messanordnung weist wenigstens einen Triangulator zum Abtasten der ersten Stirnfläche des Lagerbauteils mit einem Lichtstrahl sowie zur Detektion eines von der ersten Stirnfläche des Lagerbauteils reflektierten Lichtstrahls und Erzeugung eines Messsignals, wenigstens einen weiteren Triangulator zum Abtasten der zweiten Stirnfläche des Lagerbauteils mit einem Lichtstrahl sowie zur Detektion eines von der zweiten Stirnfläche des Lagerbauteils reflektierten Lichtstrahls und Erzeugung eines Messsignals und eine Steuer- und Auswerteeinrichtung zur zeitgleichen Triggerung der Erzeugung der Lichtstrahlen und/oder der Detektion der reflektierten Lichtstrahlen und zur Ermittlung einer die Position und räumliche Orientierung der ersten Stirnfläche repräsentierenden Lage der ersten Stirnfläche aus dem Messsignal sowie einer die Position und räumliche Orientierung der zweiten Stirnfläche repräsentierenden Lage der zweiten Stirnfläche aus dem weiteren Messsignal auf.

Die erfindungsgemäße Messanordnung kann mehrere Triangulatoren zur Abtastung der ersten Stirnfläche und/oder mehrere weitere Triangulatoren zur Abtastung der zweiten Stirnfläche aufweisen. Insbesondere können wenigstens drei Triangulatoren und/oder wenigstens drei weitere Triangulatoren vorgesehen sein. Die jeweils benötigte Mindestzahl an Triangulatoren und weiteren Triangulatoren hängt von der Messgeometrie und insbesondere von der Bewegung des Lagerbauteils ab. Die Triangulatoren und die weiteren Triangulatoren können so ausgerichtet sein, dass die Lichtstrahlen der Triangulatoren die erste Stirnfläche und die Lichtstrahlen der weiteren Triangulatoren gleichzeitig die zweite Stirnfläche des Lagerbauteils treffen. Insbesondere können die Triangulatoren hierzu so ausgerichtet sein, dass die Auftreffpunkte ihrer Lichtstrahlen auf die erste Stirnfläche des Lagerbauteils mit einer Toleranz von maximal ± 10 % auf gleichem Radius liegen. In entsprechender Weise können die Auftreffpunkte der Lichtstrahlen der weiteren Triangulatoren auf die zweite Stirnfläche des Lagerbauteils mit einer Toleranz von maximal ± 10 % auf gleichem Radius liegen. Weiterhin können die Triangulatoren und die weiteren Triangulatoren so ausgerichtet sein, dass sich ihre Lichtstrahlen in einem Punkt schneiden.

Die Triangulatoren und die weiteren Triangulatoren können starr miteinander verbunden sein. Insbesondere können die Triangulatoren und/oder die weiteren Triangulatoren gemeinsam an einem einstückig ausgebildeten Halteblock befestigt sein. Der Halteblock kann auf eine konstante Temperatur gehalten werden.

Die Erfindung wird nachstehend anhand der in der Zeichnung dargestellten Ausführungsbeispiele erläutert.

Es zeigen
- Figur 1: eine schematische Darstellung des bei der erfindungsgemäßen Vermessung eines Lagerbauteils angewendeten Messprinzips,
- Figur 2: ein Ausführungsbeispiel für eine Messanordnung zur Ermittlung der Länge des Lagerbauteils in einer schematischen Darstellung,
- Figur 3: das in Figur 2 dargestellte Ausführungsbeispiel in einer weiteren schematischen Darstellung,
- Figur 4: die geometrischen Verhältnisse der Auftreffpunkte der Lichtstrahlen auf die Stirnflächen des Lagerbauteils während der Durchführung einer Messung mit der in den Figuren 2 und 3 dargestellten Messanordnung in einer schematischen Perspektivdarstellung,
- Figur 5: ein weiteres Ausführungsbeispiel für eine Messanordnung zur Ermittlung der Länge des Lagerbauteils in einer schematischen Darstellung,
- Figur 6: eine Variante für den Durchlauf eines Lagerbauteils durch den Quertransport in einer schematischen Darstellung und
- Figur 7: eine weitere Variante für den Durchlauf eines Lagerbauteils durch den Quertransport in einer schematischen Darstellung.

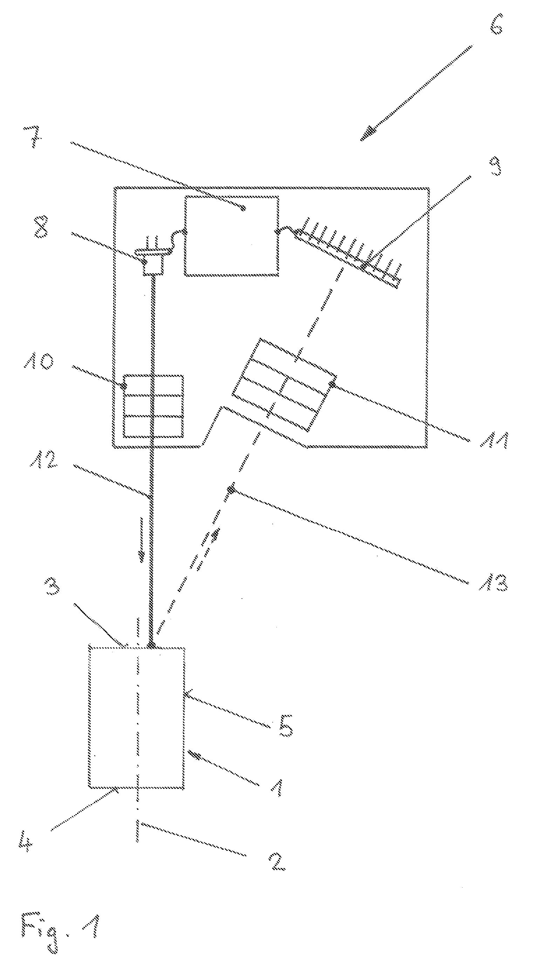

Figur 1 zeigt eine schematische Darstellung des bei der erfindungsgemäßen Vermessung eines Lagerbauteils 1 angewendeten Messprinzips.

Das Lagerbauteil 1 ist als ein Rotationskörper ausgebildet und weist demgemäß eine Rotationsachse 2 auf. Beispielsweise kann das Lagerbauteil 1 als eine Zylinderrolle ausgebildet sein und zwei kreisförmige Stirnflächen 3 und 4 aufweisen, zwischen denen sich eine zylinderförmige Mantelfläche 5 erstreckt. Bei dem Lagerbauteil 1 kann es sich alternativ zu einer Zylinderrolle beispielsweise auch um einen Wälzkörper anderer Geometrie oder um einen Lagerring eines Wälzlagers oder eines Gleitlagers handeln. Dies gilt nicht nur im Hinblick auf Figur 1, sondern analog für alle Varianten, die im Folgenden beschrieben werden und bei denen beispielhaft eine spezielle Ausführungsform des Lagerbauteils 1 genannt wird.

In einem Abstand vom Lagerbauteil 1 ist ein Triangulator 6 angeordnet, der insbesondere als ein Lasertriangulator ausgebildet ist. Der Triangulator 6 weist eine Elektronik 7 auf, an die eine Lichtquelle 8 und ein ortsauflösender Detektor 9 angeschlossen sind. Die Elektronik 7 kann beispielsweise als ein programmierbarer Baustein ausgebildet sein oder einen programmierbaren Baustein aufweisen. Die Lichtquelle 8 kann insbesondere als ein Laser ausgebildet sein, der beispielsweise in Form einer Laserdiode realisiert ist. Der ortsauflösende Detektor 9 kann beispielsweise als ein CCD- oder als ein CMOS-Sensor ausgebildet sein. Weiterhin weist der Triangulator 6 zwei Linsensysteme 10 und 11 auf.

Gesteuert von der Elektronik 7 erzeugt die Lichtquelle 8 einen Lichtstrahl 12. In der Regel wird der Lichtstrahl 12 zeitlich gepulst, wobei die Wiederholfrequenz beispielsweise 10 kHz bis 400 kHz betragen kann. Der Lichtstrahl 12 passiert das Linsensystem 10 und wird vom Linsensystem 10 auf die Stirnfläche 3 des Lagerbauteils 1 gerichtet. An der Stirnfläche 3 wird der Lichtstrahl 12 reflektiert. Ein reflektierter Lichtstrahl 13 passiert das Linsensystem 11 und trifft auf den ortsauflösenden Detektor 9. Der ortsauflösende Detektor 9 ermittelt den Auftreffpunkt des reflektierten Lichtstrahls 13 aus einer örtlichen Intensitätsverteilung und übermittelt diese Informationen zur weiteren Auswertung an die Elektronik 7. Die Ausgabe der Messwerte des ortsauflösenden Detektors 9 kann getaktet erfolgen. Der Takt kann sich insbesondere nach der verfügbaren Auswertegeschwindigkeit der Elektronik 7 richten. Aus den Einzelmessungen kann ein Mittelwert ermittelt werden, beispielsweise durch arithmetische Mittelung. Dabei ist es von Vorteil, wenn Messwert-Ausreißer nicht in die Mittelung einbezogen werden. Derartige Ausreißer gehen nämlich häufig auf Störursachen, wie z. B. ein Staubkorn, zurück.

Die Position des Auftreffpunkts des reflektierten Lichtstrahls 13 auf den ortsauflösenden Detektor 9 hängt von der Auftreffposition des Lichtstrahls 12 auf die Stirnfläche 3 des Lagerbauteils 1 und somit von der Lage der Stirnfläche 3 ab. Somit kann durch Auswertung des Signals des ortsauflösenden Detektors 9 von der Elektronik 7 die Auftreffposition des Lichtstrahls 12 auf die Stirnfläche 3 des Lagerbauteils 1 ermittelt werden. Wenn man in gleicher Weise die Auftreffposition des Lichtstrahls 12 auf die Stirnfläche 4 des Lagerbauteils 1 ermittelt, kann man die Entfernung zwischen den Stirnflächen 3 und 4 und somit die Länge des Lagerbauteils 1 berechnen. Für eine zuverlässige und präzise Längenermittlung ist jedoch eine Reihe von weiteren Maßnahmen von Bedeutung, die im Folgenden näher erläutert werden.

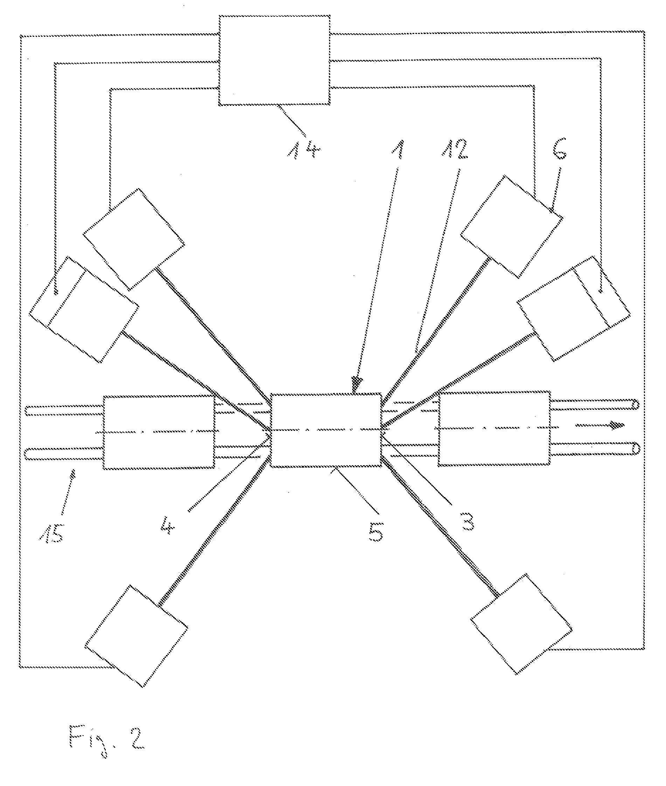

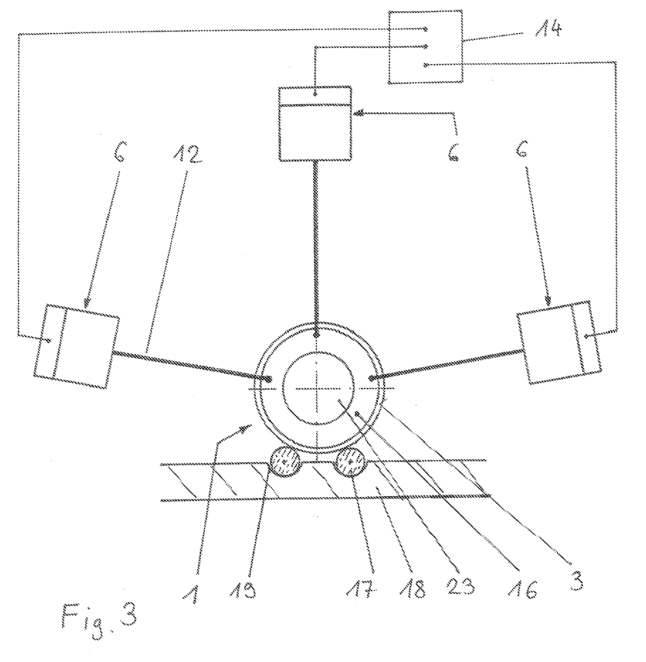

Figur 2 zeigt ein Ausführungsbeispiel für eine Messanordnung zur Ermittlung der Länge des Lagerbauteils 1 in einer schematischen Darstellung. Figur 3 zeigt das in Figur 2 dargestellte Ausführungsbeispiel in einer weiteren schematischen Darstellung.

Die Messanordnung weist zwei Sätze von jeweils drei Triangulatoren 6, eine Steuer- und Auswerteeinrichtung 14 und eine Transportvorrichtung 15 auf. Der eine Satz von Triangulatoren 6 ist so angeordnet, dass die Lichtstrahlen 12 auf die Stirnfläche 3 des Lagerbauteils 1 treffen, welche sich während der Messung auf diesen Satz von Triangulatoren 6 zu bewegt. In der Darstellung der Figur 2 sind dies die auf der rechten Seite dargestellten Triangulatoren 6. Die Transportrichtung der Lagerbauteile 1 ist durch einen Pfeil angedeutet. Der andere Satz von Triangulatoren 6 ist so angeordnet, dass die Lichtstrahlen 12 auf die Stirnfläche 4 des Lagerbauteils 1 treffen, welche sich während der Messung von diesem Satz von Triangulatoren 6 weg bewegt. In der Darstellung der Figur 2 sind dies die auf der linken Seite dargestellten Triangulatoren 6. Sämtliche Triangulatoren 6 sind mit der Steuer- und Auswerteeinrichtung 14 verbunden. Demgemäß kann die Steuer- und Auswerteeinrichtung 14 jeden Triangulator 6 ansteuern und von jedem Triangulator 6 Messsignale empfangen.

Die geometrische Anordnung und Ausrichtung beider Sätze von Triangulatoren 6 kann im Einzelnen so erfolgen, wie in Figur 3 beispielhaft für die Triangulatoren 6 dargestellt, welche die Stirnfläche 3 des Lagerbauteils 1 abtasten. Demgemäß sind die Triangulatoren 6 in jedem Satz äquidistant zueinander auf einer Kreisbogenlinie angeordnet, deren Mittelpunkt auf der Rotationsachse 2 des Lagerbauteils 1 liegt. Dabei sind die Triangulatoren 6 jeweils so ausgerichtet, dass die von ihnen erzeugten Laserstrahlen 12 jeweils innerhalb einer ringförmigen Zielzone 16 auf die Stirnfläche 3 des Lagerbauteils 1 auftreffen. Die Zielzone 16 ist so ausgewählt, dass mit den Triangulatoren 6 aussagekräftige Messungen möglich sind. Radial innerhalb der Zielzone 16 können die Messungen beispielsweise durch eine zentrale Mulde 23 erschwert werden, die bei vielen Lagerbauteilen 1 vorgesehen ist. Radial außerhalb der Zielzone 16 können die Messungen beispielsweise durch eine zwischen der Stirnfläche 3 und der Mantelfläche 5 ausgebildete Verrundung erschwert werden.

Wie aus Figur 3 ersichtlich ist, wird die Stirnfläche 3 des Lagerbauteils 1 mit den Lichtstrahlen 12 der Triangulatoren 6 gleichzeitig an drei Punkten abgetastet. Dabei können die Triangulatoren 6 so ausgerichtet werden, dass die drei Punkte innerhalb einer gewissen Toleranz auf einer gemeinsamen Kreislinie angeordnet sind, deren Mittelpunkt auf der Rotationsachse 2 des Lagerbauteils 1 liegt. Die Toleranz kann beispielsweise ± 10 % des Radius der Kreislinie betragen.

Aus den drei Auftreffpunkten der Lichtstrahlen 12 ergeben sich drei Positionskoordinaten für die Stirnfläche 3 des Lagerbauteils 1. Wenn man annimmt, dass die Stirnfläche 3 zumindest innerhalb der Zielzone 16 als eine ebene Fläche ausgebildet ist, ist die Lage der Stirnfläche 3 durch die ermittelten Positionskoordinaten der Auftreffpunkte der Lichtstrahlen 12 eindeutig definiert und nach Durchführung der Messung bekannt. Falls die Stirnfläche 3 eine Verrundung aufweist, kann man jeweils abhängig vom Ort des jeweiligen Auftreffpunkts in der Verrundung auf die ebene Fläche zurückrechnen und demgemäß einen Korrekturfaktor vorsehen. Ebenso ist es auch möglich, eine andere bekannte Form der Stirnfläche 3 als eine ebene Fläche zugrunde zu legen. Da die reale Ausbildung der Stirnfläche 3 jedoch von einer ideal ebenen Fläche abweichen kann und zudem Messfehler auftreten können, empfiehlt es sich, die Auftreffpunkte der Lichtstrahlen 12 auf die Stirnfläche 3 des Lagerbauteils 1 zu variieren und weitere Positionsbestimmung durchzuführen.

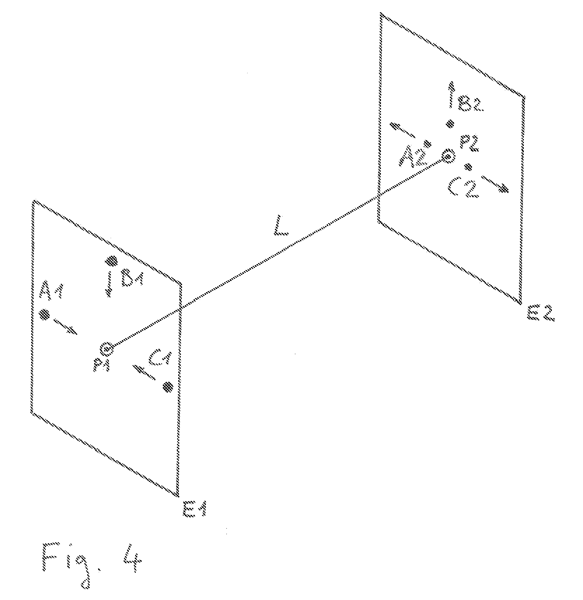

Eine Variation der Auftreffpunkte kann beispielsweise dadurch erreicht werden, dass das Lagerbauteil 1 durch die Transportvorrichtung 15 weitertransportiert wird. Die geometrische Anordnung der Triangulatoren 6 wird dabei beibehalten. Die Auswirkungen der Bewegung des Lagerbauteils 1 auf die Auftreffpunkte der Lichtstrahlen 12 werden anhand von Figur 4 näher erläutert.

Mit der bislang beschriebenen Vorgehensweise wird lediglich die Lage der Stirnfläche 3 des Lagerbauteils 1 ermittelt. Zur Ermittelung der Länge des Lagerbauteils 1 wird zusätzlich die Kenntnis der Lage der Stirnfläche 4 benötigt. Falls das Lagerbauteil 1 während der Messungen bewegt wird, ist es zudem von größter Bedeutung, die Lage der Stirnflächen 3 und 4 des Lagerbauteils 1 gleichzeitig zu ermitteln.

Zur Ermittlung der Länge des Lagerbauteils 1 werden die beiden Sätze von Triangulatoren 6 insbesondere so justiert, dass sich die Lichtstrahlen 12 sämtlicher Triangulatoren 6 in einem gemeinsamen Punkt schneiden. Außerdem können je zwei Triangulatoren 6 jeweils paarweise so einander gegenüberliegend angeordnet werden, dass ihre Lichtstrahlen 12 an einer vorgegebenen Position des jeweils anderen Triangulators 6 auftreffen. Diese Position kann insbesondere so gewählt werden, dass sie mit dem ortsauflösenden Detektor 9 erfasst werden kann. Um eine hohe Präzision und Langzeitstabilität zu gewährleisten, können mehrere und insbesondere auch sämtliche Triangulatoren 6 starr miteinander verbunden sein. Hierzu können die Triangulatoren 6 beispielsweise an einem einstückig ausgebildeten, massiven Halteblock befestigt sein, der auf einer vorgegebenen Temperatur gehalten wird.

Die Lagerbauteile 1 werden mit der Transportvorrichtung 15 kontinuierlich in die dargestellte Transportrichtung weitertransportiert. Hierfür weist die Transportvorrichtung 15 zwei parallel zueinander verlaufende Riemen 17 sowie eine Riemenführungsplatte 18 auf. Die Riemen 17 weisen jeweils einen kreisförmigen Querschnitt auf und können beispielsweise aus Polyurethan hergestellt sein. Um eine möglichst optimale Auflage der Lagerbauteile 1 auf den Riemen 17 zu ermöglichen, können die Riemen 17 in eine langsame Rotationsbewegung versetzt werden. Bei dieser Rotationsbewegung handelt es sich um eine Querrotation senkrecht zur Transportrichtung. Die Riemenführungsplatte 18 ist beispielsweise aus Stahl gefertigt und weist zwei parallel verlaufende Nuten 19 mit jeweils kreisbogenförmigem Querschnitt auf, welche die Riemen 17 partiell aufnehmen.

Die Transportgeschwindigkeit der Lagerbauteile 1 kann dabei wenigstens 5 m/min, insbesondere wenigstens 10 m/min betragen. Weiterhin kann die Transportgeschwindigkeit der Lagerbauteile 1 maximal 15 m/min betragen. Auch während der Messung wird die Transportbewegung nicht unterbrochen, d. h. es wird im kontinuierlichen Durchlauf der Lagerbauteile 1 gemessen. Dadurch ist es möglich, die Messanordnung in eine Fertigungslinie zu integrieren, ohne den Fertigungsablauf zu stören. Allerdings ist es bei einer Messung an bewegten Lagerbauteilen 1 erforderlich, sämtliche Triangulatoren 6 so miteinander zu synchronisieren, dass sie ihre Messungen mit hoher Genauigkeit gleichzeitig durchführen. Nur dann ist gewährleistet, dass sich das Lagerbauteil 1 bei den Messungen aller sechs Triangulatoren 6 am gleichen Ort befindet und die Messungen folglich miteinander in Beziehung gesetzt werden können. Die Synchronisation wird mit Hilfe der Steuer- und Auswerteeinrichtung 14 durchgeführt, die zu diesem Zweck Triggerimpulse an sämtliche Triangulatoren 6 sendet. Die Triggerimpulse werden von den Elektroniken 7 der Triangulatoren 6 empfangen. Die Elektroniken 7 steuern daraufhin beispielsweise die Lichtquellen 8 an, so dass diese jeweils zeitgleich einen Lichtstrahl 12 erzeugen. Alternativ oder zusätzlich können die Elektroniken 7 die ortsauflösenden Detektoren 9 ansteuern, so dass diese zeitgleich eine Detektion der reflektierten Lichtstrahlen 13 durchführen. Anstelle einer Triggerung jeder einzelnen Messung durch die Steuer- und Auswerteeinrichtung 14 besteht auch die Möglichkeit, die Elektroniken 7 von Zeit zu Zeit mittels eines Triggerimpulses zu synchronisieren und die einzelnen Messungen dann durch interne, durch diesen Triggerimpuls miteinander synchronisierte Taktsignale zu Triggern. Das setzt allerdings eine hinreichende Genauigkeit der internen Taktsignale voraus.

Wie im Folgenden noch näher erläutert wird, ist es sinnvoll, Wiederholungsmessungen mit den Triangulatoren 6 zu weiteren Zeitpunkten durchzuführen, wobei für diese Wiederholungsmessungen jeweils wieder für die Gesamtheit der beteiligten Triangulatoren 6 das Erfordernis der Gleichzeitigkeit gilt. Dabei sind Wiederholungsmessungen so lange möglich, bis die Auftreffpunkte der Lichtstrahlen 12 auf die Stirnflächen 3 und 4 aus den Zielzonen 16 herauswandern. Dies wird anhand von Figur 4 näher erläutert.

Figur 4 skizziert die geometrischen Verhältnisse der Auftreffpunkte der Lichtstrahlen 12 auf die Stirnflächen 3 und 4 des Lagerbauteils 1 während der Durchführung einer Messung mit der in den Figuren 2 und 3 dargestellten Messanordnung in einer schematischen Perspektivdarstellung.

Im Vordergrund der Figur 4, d. h. links unten, ist eine Ebene E1 dargestellt, in der die Stirnfläche 4 des Lagerbauteils 1 liegt. Die Ebene E1 enthält drei mit A1, B1 und C1 bezeichnete Auftreffpunkte der Lichtstrahlen 12 der in Figur 2 auf der linken Seite dargestellten Triangulatoren 6. Weiterhin ist in die Ebene E1 ein Punkt P1 eingezeichnet, an dem die Rotationsachse 2 des Lagerbauteils 1 die Ebene E1 durchstößt.

Im Hintergrund der Figur 4, d. h. rechts oben, ist eine Ebene E2 dargestellt, in der die Stirnfläche 3 des Lagerbauteils 1 liegt. Die Ebene E2 enthält drei mit A2, B2 und C2 bezeichnete Auftreffpunkte der Lichtstrahlen 12 der in Figur 2 auf der rechten Seite dargestellten Triangulatoren 6. Weiterhin ist in die Ebene E2 ein Punkt P2 eingezeichnet, an dem die Rotationsachse 2 des Lagerbauteils 1 die Ebene E2 durchstößt. Die Punkte P1 und P2 sind durch eine mit L bezeichnete Strecke miteinander verbunden, welche ein Maß für die Länge des Lagerbauteils 1 darstellt.

Durch Pfeile ist jeweils die Bewegungsrichtung der Auftreffpunkte A1, B1, C1 und A2, B2, C2 der Lichtstrahlen 12 bei einer Bewegung des Lagerbauteils 1 in der in Figur 2 dargestellten Transportrichtung veranschaulicht. Aus den Richtungen der eingezeichneten Pfeile ergibt sich, dass die Auftreffpunkte A1, B1 und C1 während der Messung infolge der Bewegung des Lagerbauteils 1 zum Punkt P1 hin wandern. Das resultiert daraus, dass sich das Lagerbauteil 1 mit der Stirnfläche 4 von den Triangulatoren 6, welche die Auftreffpunkte A1, B1 und C1 erzeugen, entfernt. Die Auftreffpunkte A2, B2 und C2 wandern während der Messung vom Punkt P2 weg, da sich das Lagerbauteil 1 mit der Stirnfläche 3 den Triangulatoren 6, welche die Auftreffpunkte A2,B2 und C2 erzeugen, annähert.

Zur Ermittlung der Länge wird das Lagerbauteil 1 möglichst gleichförmig in der in Figur 2 dargestellten Transportrichtung bewegt und es werden während der Bewegung mehrere Messdatensätze erfasst, wobei jeder Messdatensatz zum gleichen Zeitpunkt ermittelte Positionskoordinaten der Auftreffpunkte A1, B1, C1, A2, B2, C2 enthält. Bei den Positionskoordinaten der Auftreffpunkte kann es sich beispielsweise jeweils um drei kartesische Koordinaten handeln. In die Ermittlung der Länge des Lagerbauteils 1 gehen nur Messdatensätze ein, bei denen die Auftreffpunkte A1, B1, C1 und A2, B2, C2 jeweils innerhalb der Zielzone 16 liegen.

Aus jedem Messdatensatz wird jeweils die Ebene E1 und die Ebene E2 ermittelt, wobei in die Ermittlung der Ebene E1 die Positionskoordinaten der Auftreffpunkte A1, B1, C1 und in die Ermittlung der Ebene E2 die Positionskoordinaten der Auftreffpunkte A2, B2, C2 eingehen. Falls die Stirnflächen 3 und 4 des Lagerbauteils 1 im Übergangsbereich zur Mantelfläche 5 verrundet sind, müssen zur Erzielung einer hohen Messgenauigkeit Korrekturen vorgenommen werden, die von dem in der Regel bekannten Verlauf der Verrundung abhängen. Für jedes so ermittelte Ebenenpaar E1, E2 wird jeweils das Lot auf die Ebene E1 und das Lot auf die Ebene E2 gefällt. Dann wird jeweils aus beiden Loten ein gemitteltes Lot berechnet, welches der Winkelhalbierenden des durch die beiden Lote aufgespannten Winkels entspricht. Für die weitere Auswertung wird als eine Näherung angenommen, dass die Rotationsachse 2 des Lagerbauteils 1 parallel zu dem gemittelten Lot verläuft. Das gemittelte Lot wird dann rechnerisch in eine Position verschoben, in der auf Basis der Geometrie der Messanordnung die Rotationsachse 2 des Lagerbauteils 1 erwartet wird.

Um das verschobene Lot als Mittelpunkt wird für beide Stirnflächen 3 und 4 des Lagerbauteils 1 je ein Kreis berechnet, der in der Ebene E1 bzw. in der Ebene E2 liegt und dessen Radius dem Radius des Lagerbauteils 1 im Bereich der Stirnfläche 3 bzw. 4 zuzüglich möglicher Fehler z. B. im Hinblick auf eine Abweichung von einer idealen Rundheit entspricht. Dies bedeutet, dass die tatsächlichen Stirnflächen 3 und 4 des Lagerbauteils 1 innerhalb der berechneten Kreise liegen.

Es werden dann der minimale und der maximale Abstand der Kreise parallel zum gemittelten Lot bestimmt. Diese Abstandswerte entsprechen der minimalen und der maximalen Länge des Lagerbauteils 1. Von besonderer Bedeutung ist in der Regel jeweils die maximale Länge des Lagerbauteils 1, da diese bei vielen Anwendungsfällen einen vorgegebenen Wert nicht überschreiten darf. Abhängig von der ermittelten maximalen Länge, wird das Lagerbauteil 1 in unterschiedliche Längenklassen einsortiert. Es besteht aber auch die Möglichkeit, das Lagerbauteil 1 auszusortieren, wenn die ermittelte maximale Länge um mehr als eine zulässige Toleranz von einem vorgegebenen Wert abweicht.

Der Unterschied zwischen der minimalen und der maximalen Länge des Lagerbauteils 1 lässt Rückschlüsse auf die Abweichung der Stirnflächen 3 und 4 von einer parallelen Anordnung zu. Auch hierfür kann ein maximal zulässiger Wert vorgegeben werden. Bei einer Überschreitung eines vorgegebenen Werts kann das Lagerbauteil 1 ausgesondert werden. Die nicht ausgesonderten Lagerbauteile 1 liegen dann innerhalb der vorgegebenen Toleranzen.

Um eine möglichst hohe Messgenauigkeit zu erreichen, kann die vorstehend beschriebene Längenbestimmung mehrfach durchgeführt werden und dann eine Mittelwertbildung erfolgen. Ebenso ist es auch möglich, unter Berücksichtigung der Bewegung des Lagerbauteils 1 aus allen Messdatensätzen eine gemittelte Ebene E1 und eine gemittelte Ebene E2 zu ermitteln und daraus analog zur beschriebenen Vorgehensweise die Länge des Lagerbauteils 1 zu errechnen.

Der Mittelwert kann beispielsweise als arithmetisches Mittel aus den einzelnen Messwerten berechnet werten. Dabei lässt sich eine Genauigkeitssteigerung dadurch erreichen, dass Ausreißer bei den Messwerten, d. h. Messwerte die stärker als eine vorgegebene Schwankungsbreite von einem Vergleichswert abweichen, nicht in die Mittelwertbildung einbezogen werden. Als Vergleichswert kann beispielsweise ein Sollmaß oder ein gleitender Mittelwert der bisherigen Messwerte usw. herangezogen werden.

Um das Risiko von Fehlmessungen zu verringern, die durch lokale Verunreinigungen, wie beispielsweise Staub, verursacht werden können, können die Messungen zur Ermittlung der Länge des Lagerbauteils 1 an unterschiedlichen Stellen der Stirnflächen 3 und 4 des Lagerbauteils 1 durchgeführt werden. Diese Maßnahme liefert in Kombination mit der vorstehend beschriebenen Auslassung von Messwerten bei der Mittelwertbildung besonders gute Resultate.

Da die Bewegung des Lagerbauteils 1 während der Messung parallel zu seiner Rotationsachse 2 eine Bewegungsunschärfe und somit eine Reduzierung der Messgenauigkeit zur Folge hat, wirkt es sich positiv auf die Messgenauigkeit auf, wenn diese Bewegung des Lagerbauteils 1 während der Messung relativ gering ist.

Dies kann beispielsweise dadurch erreicht werden, dass eine sehr kurze Messzeit verwendet wird, so dass sich die Position des Lagerbauteils 1 nur geringfügig ändert. Dabei kann die Messzeit umso kürzer ausfallen, je höher die Intensität der Lichtstrahlen 12 ist, da für ein aussagekräftiges Messergebnis jeweils eine Mindestdosis von den ortsauflösenden Detektoren 9 erfasst werden muss. Demgemäß werden zur Erzielung einer hohen Genauigkeit Triangulatoren 6 verwendet, die sehr intensive Lichtstrahlen 12 erzeugen. Beispielsweise können hierzu Triangulatoren 6 eingesetzt werden, die Klasse 3-Laser als Lichtquellen 8 aufweisen.

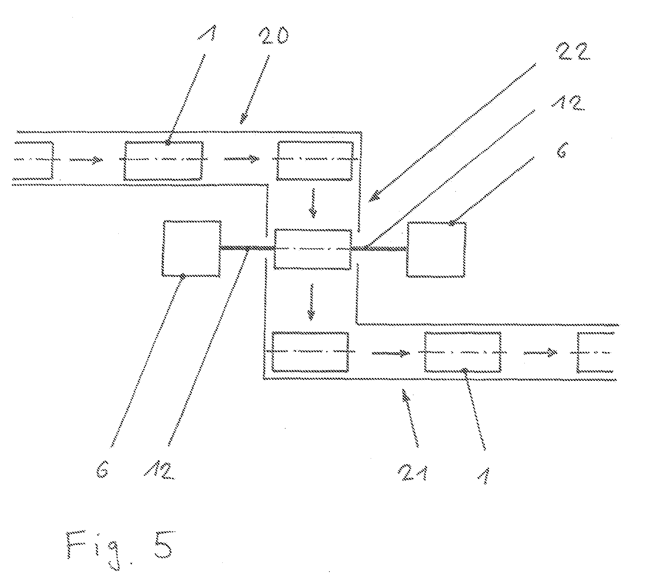

Alternativ oder zusätzlich besteht die Möglichkeit, dass man während der Messung die Geschwindigkeit des Lagerbauteils 1 parallel zu seiner Rotationsachse 2 möglichst gering hält. Allerdings wäre es störend für den Fertigungsprozess, wenn man die Lagerbauteile 1 jeweils für die Messung anhalten würde. Aus diesem Grund ist bei einer Variante des erfindungsgemäßen Verfahrens vorgesehen, den Durchsatz an Lagerbauteilen 1 beizubehalten und gleichzeitig die Bewegung der Lagerbauteile 1 parallel zu ihren Rotationsachsen 2 nahezu vollständig einzufrieren. Dies wird dadurch erreicht, dass man die Längsbewegung der Lagerbauteile 1 parallel zu ihren Rotationsachsen 2 jeweils wenigsten für den Zeitraum der Messung in eine Querbewegung quer zu ihren Rotationsachsen 2 umwandelt. Näheres hierzu wird anhand der Figuren 5 bis 7 erläutert.

Figur 5 zeigt ein weiteres Ausführungsbeispiel für eine Messanordnung zur Ermittlung der Länge des Lagerbauteils 1 in einer schematischen Darstellung.

Die Messanordnung weist eine modifizierte Transportvorrichtung 15 mit zwei Längstransporten 20, 21 und einem Quertransport 22 auf. Die Längstransporte 20, 21 können jeweils analog zu der in Figur 3 dargestellten Transportvorrichtung 15 ausgebildet sein. Der Quertransport 22 ist zwischen den Längstransporten 20 und 21 angeordnet und beispielsweise als eine Rampe oder eine Rutsche ausgebildet, ggf. in Kombination mit einem Stößel, der die Lagerbauteile 1 in Querrichtung beschleunigt, um eine hohe Quergeschwindigkeit zu erreichen. Falls eine Rampe verwendet wird, rollen die Lagerbauteile 1 im Bereich des Quertransports 22. Falls eine Rutsche verwendet wird, rutschen die Lagerbauteile 1 im Bereich des Quertransports 22, d. h. sie führen eine Gleitbewegung aus. Ebenso ist der Einsatz eines Revolvers, eines Rads oder einer sonstigen Vorrichtung zur Aufnahme der Lagerauteile 1 und zum Transport in Querrichtung ohne Eigendrehung der Lagerauteile 1 möglich.

Im Bereich des Quertransports 22 sind beidseits, d. h. seitlich neben den Stirnflächen 3 und 4 der Lagerbauteile 1, jeweils ein oder mehrere Triangulatoren 6 angeordnet. Diese Geometrie hat zur Folge, dass die Lagerbauteile 1 allenfalls eine geringfügige Längsbewegung ausführen, während sie sich an den Triangulatoren 6 vorbei bewegen. Somit ist die Längsbewegung der Lagerbauteile 1 während der Messung gleich Null oder zumindest sehr gering. Die Querbewegung ist dagegen von erheblicher Größe, wirkt sich jedoch nicht störend auf die Messung aus, da sie keine Variation des Abstandes der Stirnflächen 3 und 4 der Lagerbauteile 1 zu den Triangulatoren 6 und somit keine Bewegungsunschärfe zur Folge hat. Insbesondere besteht die Möglichkeit, die Triangulatoren 6 so anzuordnen, dass die Lichtstrahlen 12 senkrecht auf die Stirnflächen 3 und 4 der Lagerbauteile 1 treffen. Dies erhöht die Messgenauigkeit im Vergleich zu einem schrägen Auftreffen der Lichtstrahlen 12.

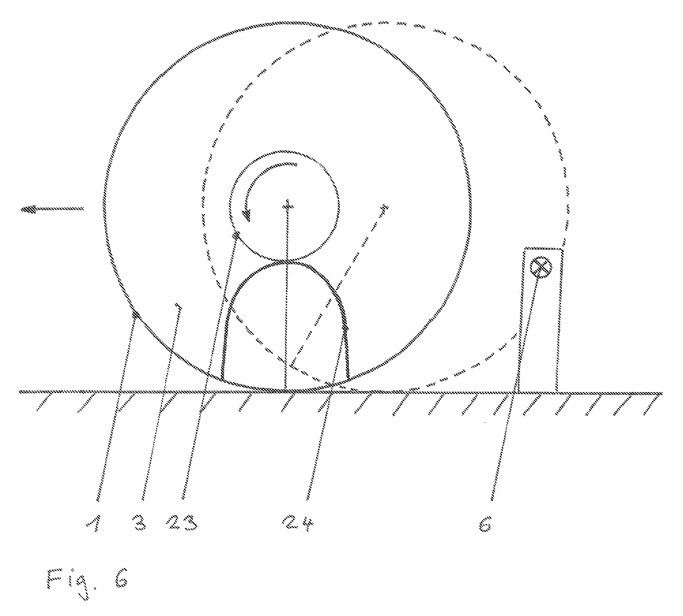

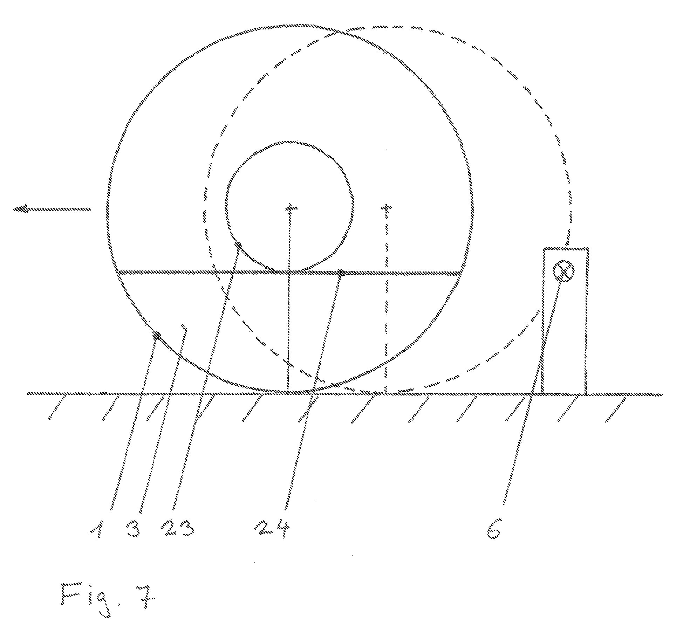

Da die Triangulatoren 6 ortsfest angeordnet sind, variieren die Auftreffpunkte der Lichtstrahlen 12 auf den Stirnflächen 3 und 4 der Lagerbauteile 1. Dies wird anhand der Figuren 6 und 7 näher erläutert.

Figur 6 zeigt eine Variante für den Durchlauf eines Lagerbauteils 1 durch den Quertransport 22 in einer schematischen Darstellung. Bei dieser Variante rollt das Lagerbauteil 1 während des Durchlaufs durch den Quertransport 22, d. h. es führt eine Rotationsbewegung um seine Rotationsachse 2 aus. Die Abtastung der Stirnfläche 3 des Lagerbauteils 1 soll lediglich außerhalb der zentralen Mulde 23 erfolgen, d. h. die Zielzone 16 entspricht der Stirnfläche 3 ohne die zentrale Mulde 23. Falls das Lagerbauteil 1 am Rand der Stirnfläche 3 eine Kantenkürzung oder Verrundung aufweist, kann die Zielzone 16 auch einen etwas kleineren Durchmesser als den Durchmesser der Stirnfläche 3 aufweisen. Um ein Auftreffen des Lichtstrahls 12 des Triangulators 6 auf die Stirnfläche 3 des Lagerbauteils 1 innerhalb der zentralen Mulde 23 zu vermeiden, ist der Triangulator 6 so angeordnet, dass der Lichtstrahl 12 knapp unterhalb der zentralen Mulde 23 aus dem Triangulator 6 austritt.

Das Lagerbauteil 1 bewegt sich in Pfeilrichtung und dreht sich dabei um seine Rotationsachse 2. Eine frühere Position des Lagerbauteils 1 ist durch eine gestrichelte Linie angedeutet. Die Bewegung des Lagerbauteils 1 hat zur Folge, dass der Auftreffpunkt des ortsfesten Lichtstrahls 12 auf die Stirnfläche 3 des Lagerbauteils 1 auf einer Bahnkurve 24 verläuft. Die Bahnkurve 24 beginnt am Rand der Stirnfläche 3 und erstreckt sich in einem gekrümmten Verlauf radial einwärts. Kurz vor der zentralen Mulde 23 hat die Bahnkurve 24 ihren radial innersten Punkt erreicht und folgt dann einem gekrümmten Verlauf radial auswärts. Die Bahnkurve 24 liegt in der Ebene der Stirnfläche 3, so dass aus den entlang der Bahnkurve 24 erfassten Messwerten die Lage der Ebene der Stirnfläche 3 ermittelt werden kann. Zur Vermeidung von Fehlern und zur Erhöhung der Messgenauigkeit können mehrere Triangulatoren 6 zum Einsatz kommen und demgemäß mehrere Bahnkurven 24 ermittelt werden.

In analoger Weise wie in Figur 6 für die Stirnfläche 3 dargestellt und zur gleichen Zeit wird auch die Stirnfläche 4 vermessen. Aus den für die Stirnflächen 3 und 4 ermittelten Messwerten kann in der bereits beschriebenen Weise die Länge des Lagerbauteils 1 bestimmt werden.

Figur 7 zeigt eine weitere Variante für den Durchlauf eines Lagerbauteils 1 durch den Quertransport 22 in einer schematischen Darstellung. Bei dieser Variante führt das Lagerbauteil 1 während des Durchlaufs durch den Quertransport 22 lediglich eine lineare Bewegung und keine Rotation aus. Demgemäß hat die Bahnkurve 24 bei einer Figur 6 entsprechenden Anordnung des Triangulators 6 die Form einer geraden Linie, die knapp radial außerhalb der zentralen Mulde 23 verläuft. Um die Lage der Ebene zu ermitteln, in der die Stirnfläche 3 liegt, ist wenigstens eine weitere Bahnkurve 24 erforderlich, d. h. es wird wenigstens ein weiterer Triangulator 6 benötigt. Dieser weitere Triangulator 6 kann so angeordnet sein, dass dessen Lichtstrahl 12 radial weiter außen auf die Stirnfläche 3 trifft und als Bahnkurve 24 eine gerade Linie erzeugt, die parallel zu der in Figur 7 dargestellten Bahnkurve 24 verläuft.

Auch bei der in Figur 7 dargestellten Variante wird die Stirnfläche 4 des Lagerbauteils 1 in analoger Weise vermessen und die Länge des Lagerbauteils 1 ermittelt.

Bei einer Abwandlung der Messanordnung ist der Quertransport 22 so ausgebildet, dass die Lagerbauteile 1 jeweils nicht längs einer geraden Bahn, sondern entlang einer gekrümmten Bahn an den ortsfesten Triangulatoren 6 vorbeigeführt werden. In diesem Fall sind die Bahnkurven 24 der Auftreffpunkte der Lichtstrahlen 12 auf die Stirnflächen 3 und 4 der Lagerbauteile 1 ebenfalls gekrümmt. Da die gekrümmten Bahnkurven 24 jeweils eine größere Länge aufweisen als entsprechende gerade Bahnkurven 24, stehen mehr Messwerte zur Verfügung, so dass eine höhere Genauigkeit erzielt werden kann. Außerdem ist es bei einer gekrümmten Ausbildung der Bahnkurven 24 ausreichend, für die Stirnfläche 3 und die Stirnfläche 4 jeweils entlang einer einzigen Bahnkurve 24 zu messen, um die Lage der Stirnflächen 3 und 4 zu ermitteln.

Mit dem erfindungsgemäßen Verfahren kann die Länge der Lagerbauteile 1 abhängig von der eingesetzten Messanordnung und der eingesetzten Verfahrensvariante mit einer Genauigkeit von besser als ± 5 µm, besser als ± 1 µm oder sogar besser als ± 0,5 µm ermittelt werden.

Um eine hohe Messgenauigkeit zu erreichen wird zunächst eine Grundkalibrierung der Messanordnung durchgeführt. Dabei werden den Triangulatoren 6 Korrekturwerte gegenüber ihren zunächst angenommenen Nominalpositionen zugewiesen, bis die Messergebnisse der Triangulatoren 6 völlig unabhängig von der Raumlage des bei der Kalibrierung verwendeten Werkstücks sind. Eine nicht vollständige Kalibrierung ergibt in manchen Raumlagen möglicherweise korrekte Messergebnisse, in anderen Raumlagen dann aber variierende Fehleranteile. Die Kalibrierung erfordert das rechnerische Bewegen jedes Triangulators 6 in den drei Raumebenen und zwei Schwenkwinkeln. Indem man ein vorbekanntes Endmaß oder anderes hochgenaue Werkstück in die Messposition gibt und es in schneller Abfolge in sehr viele verschiedene Raumlagen bringt, erhält man eine Vielzahl von Datensätzen. Allen Datensätzen ist gemeinsam, dass die wahre Abmessung des Werkstückes unverändert geblieben ist. Daraus ergeben sich Gleichungssysteme mit einer hohen Anzahl von Unbekannten, die sich durch entsprechende Lösungsalgorithmen in entsprechende Kalibrierwerte je Triangulator 6 auflösen lassen.

Um die hohe Messgenauigkeit zuverlässig über einen langen Zeitraum zu erhalten, kann bei allen Ausführungsvarianten immer wieder eine Nachkalibrierung der Messanordnung vorgenommen werden. Beispielsweise kann die Nachkalibrierung jeweils nach der Messung einer vorgegebenen Zahl von Lagerbauteilen 1 oder in festen Zeitabständen durchgeführt werden. Ebenso ist es auch möglich, die Nachkalibrierung jeweils bei Erfüllung einer sonstigen Bedingung zu starten, beispielsweise dann, wenn mehr als eine vorgegebene Zahl von Lagerbauteilen 1 unzulässig stark von einem Sollwert abweichen. Um durch die Nachkalibrierung den Messbetrieb und auch den gesamten Produktionsprozess möglichst wenig zu stören, können zur Nachkalibrierung exakt bemaßte Prüfkörper manuell oder automatisch der Messanordnung zugeführt werden und nach Durchlauf durch die Messanordnung wieder ausgeschleust werden. Dabei können die Prüfkörper hinsichtlich ihrer äußeren Gestalt den Lagerbauteilen 1 vollständig oder auch nur bezüglich des zu kalibrierenden Längenmaßes entsprechen. Insbesondere ist es auch möglich, als Prüfkörper Lagerbauteile 1 zu verwenden, deren Maße sehr genau mit einem gewünschten Sollwert übereinstimmen.

Alternativ oder zusätzlich zur Ermittlung der Lage der Stirnflächen 3 und 4 des Lagerbauteils 1 kann ermittelt werden, ob die Form der Stirnflächen 3 und 4 jeweils innerhalb einer vorgegebenen Toleranz mit einer vorgegebenen Form übereinstimmt. Hierzu wird die vorgegebene Form bestmöglich den Auftreffpunkten der Lichtstrahlen 12 auf den Stirnflächen 3 und 4 des Lagerbauteils 1 angenähert und dann die verbleibende Abweichung ermittelt und mit der vorgegebenen Toleranz verglichen.

### Bezugszeichenliste

- 1: Lagerbauteil
- 2: Rotationsachse
- 3: Stirnfläche
- 4: Stirnfläche
- 5: Mantelfläche
- 6: Triangulator
- 7: Elektronik
- 8: Lichtquelle
- 9: Ortsauflösender Detektor
- 10: Linsensystem
- 11: Linsensystem
- 12: Lichtstrahl
- 13: Reflektierter Lichtstrahl
- 14: Steuer- und Auswerteeinrichtung
- 15: Transportvorrichtung
- 16: Zielzone
- 17: Riemen
- 18: Riemenführungsplatte
- 19: Nut
- 20: Längstransport
- 21: Längstransport
- 22: Quertransport
- 23: Zentrale Mulde
- 24: Bahnkurve

## Patentansprüche

1. Verfahren zur Vermessung eines Lagerbauteils (1), das eine erste Stirnfläche (3) und eine zweite Stirnfläche (4) aufweist, die entlang einer Rotationsachse (2) des Lagerbauteils (1) beabstandet zueinander angeordnet sind, wobei
- die erste Stirnfläche (3) des Lagerbauteils (1) mit einem Lichtstrahl (12) wenigstens eines Triangulators (6) abgetastet wird,
- ein von der ersten Stirnfläche (3) reflektierter Lichtstrahl (13) vom Triangulator (6) detektiert wird und ein Messsignal erzeugt wird,
- die zweite Stirnfläche (4) des Lagerbauteils (1) mit einem Lichtstrahl (12) wenigstens eines weiteren Triangulators (6) abgetastet wird,
- ein von der zweiten Stirnfläche (4) reflektierter Lichtstrahl (13) vom weiteren Triangulator (6) detektiert wird und ein weiteres Messsignal erzeugt wird,
- die Erzeugung der Lichtstrahlen (12) und/oder die Detektion der reflektierten Lichtstrahlen (13) zeitgleich getriggert werden,
- aus dem Messsignal eine die Position und räumliche Orientierung der ersten Stirnfläche (3) repräsentierende Lage der ersten Stirnfläche (3) ermittelt wird und
- aus dem weiteren Messsignal eine die Position und räumliche Orientierung der zweiten Stirnfläche (4) repräsentierende Lage der zweiten Stirnfläche (4) ermittelt wird.

2. Verfahren nach Anspruch 1, **dadurch gekennzeichnet, dass** zur Erzeugung des Messsignals die erste Stirnfläche (3) an wenigstens drei verschiedenen Auftreffpunkten des Lichtstrahls des Triangulators auf die erste Stirnfläche (3) abgetastet wird und zur Erzeugung des weiteren Messsignals die zweite Stirnfläche (4) an wenigstens drei verschiedenen Auftreffpunkten des Lichtstrahls des weiteren Triangulators auf die zweite Stirnfläche (4) abgetastet wird.

3. Verfahren nach einem der vorhergehenden Ansprüche, **dadurch gekennzeichnet, dass** die erste Stirnfläche (3) an wenigstens einem Auftreffpunkt des Lichtstrahls des Triangulators auf die erste Stirnfläche (3) abgetastet wird, der außerhalb einer Gerade liegt, welche durch zwei weitere Auftreffpunkte auf der ersten Stirnfläche (3) verläuft und die zweite Stirnfläche (4) an wenigstens einem Auftreffpunkt des Lichtstrahls des weiteren Triangulators auf die zweite Stirnfläche (4) abgetastet wird, der außerhalb einer Gerade liegt, welche durch zwei weitere Auftreffpunkte auf der zweiten Stirnfläche (4) verläuft.

4. Verfahren nach einem der vorhergehenden Ansprüche, **dadurch gekennzeichnet, dass** aus dem Messsignal und dem weiteren Messsignal die Rotationsachse (2) des Lagerbauteils (1) näherungsweise ermittelt wird.

5. Verfahren nach einem der vorhergehenden Ansprüche, **dadurch gekennzeichnet, dass** aus dem Messsignal und dem weiteren Messsignal ermittelt wird, ob die erste Stirnfläche (3) und die zweite Stirnfläche (4) des Lagerbauteils (1) innerhalb einer vorgegebenen Toleranz eine vorgegebene Form aufweisen.

6. Verfahren nach einem der vorhergehenden Ansprüche, **dadurch gekennzeichnet, dass** aus dem Messsignal und dem weiteren Messsignal ermittelt wird, ob die erste Stirnfläche (3) und die zweite Stirnfläche (4) des Lagerbauteils (1) innerhalb einer vorgegebenen Toleranz parallel zueinander orientiert sind.

7. Verfahren nach einem der vorhergehenden Ansprüche, **dadurch gekennzeichnet, dass** aus der Lage der ersten Stirnfläche (3) und aus der Lage der zweiten Stirnfläche (4) ein Längenmaß des Lagerbauteils (1) ermittelt wird.

8. Verfahren nach Anspruch 6, **dadurch gekennzeichnet, dass** als Längenmaß die maximale Entfernung zwischen der ersten Stirnfläche (3) und der zweiten Stirnfläche (4) ermittelt wird.

9. Verfahren nach einem der vorhergehenden Ansprüche, **dadurch gekennzeichnet, dass** das Lagerbauteil (1) während der Messung bewegt wird.

10. Verfahren nach einem der vorhergehenden Ansprüche, **dadurch gekennzeichnet, dass** mit wenigstens einem Kalibrierelement eine Kalibrierung durchgeführt wird.

11. Verfahren nach einem der vorhergehenden Ansprüche, **dadurch gekennzeichnet, dass** die Temperatur des Lagerbauteils (1) ermittelt wird.

12. Verfahren nach einem der vorhergehenden Ansprüche, **dadurch gekennzeichnet, dass** das Lagerbauteil (1) aussortiert wird, falls das ermittelte Längenmaß um mehr als eine zulässige Toleranz von einem vorgegebenen Wert abweicht.

13. Messanordnung zur Vermessung eines Lagerbauteils (1), das eine erste Stirnfläche (3) und eine zweite Stirnfläche (4) aufweist, die entlang einer Rotationsachse (2) des Lagerbauteils (1) beabstandet zueinander angeordnet sind, mit
- wenigstens einem Triangulator (6) zum Abtasten der ersten Stirnfläche (3) des Lagerbauteils (1) mit einem Lichtstrahl (12) sowie zur Detektion eines von der ersten Stirnfläche (3) des Lagerbauteils (1) reflektierten Lichtstrahls (13) und Erzeugung eines Messsignals,
- wenigstens einem weiteren Triangulator (6) zum Abtasten der zweiten Stirnfläche (4) des Lagerbauteils (1) mit einem Lichtstrahl (12) sowie zur Detektion eines von der zweiten Stirnfläche (4) des Lagerbauteils (1) reflektierten Lichtstrahls (13) und Erzeugung eines Messsignals und
- einer Steuer- und Auswerteeinrichtung (14) zur zeitgleichen Triggerung der Erzeugung der Lichtstrahlen (12) und/oder der Detektion der reflektierten Lichtstrahlen (13) und zur Ermittlung einer die Position und räumliche Orientierung der ersten Stirnfläche (3) repräsentierenden Lage der ersten Stirnfläche (3) aus dem Messsignal sowie einer die Position und räumliche Orientierung der zweiten Stirnfläche (4) repräsentierenden Lage der zweiten Stirnfläche (4) aus dem weiteren Messsignal.

14. Messanordnung nach Anspruch 13, **dadurch gekennzeichnet, dass** mehrere Triangulatoren (6) zur Abtastung der ersten Stirnfläche (3) und/oder mehrere weitere Triangulatoren (6) zur Abtastung der zweiten Stirnfläche (4) vorgesehen sind.

15. Messanordnung nach einem der Ansprüche 13 oder 14, **dadurch gekennzeichnet, dass** die Triangulatoren (6) und die weiteren Triangulatoren (6) starr miteinander verbunden sind.
